# EUROPÄISCHE PATENTSCHRIFT

(11) **EP 1 801 440 B1**
(45) Veröffentlichungstag und Bekanntmachung des Hinweises auf die Patenterteilung: **11.11.2009**
(21) Anmeldenummer: 06125468.6
(22) Anmeldetag: 06.12.2006
(51) Int. Cl.: F16D 7/10

(54) **Nicht schaltbare, formschlüssig nachgiebige Kupplung**
Non-switchable positively engageable flexible coupling
Accouplement positive flexible non embrayable

(30) Priorität: 22.12.2005 DE 102005061435
(43) Veröffentlichungstag der Anmeldung: 27.06.2007
(73) Patentinhaber: ZF Lenksysteme GmbH, 73527 Schwäbisch Gmünd (DE)
(72) Erfinder: Bieber, Jürgen, 73655 Plüderhausen (DE); Zimmermann, Martin, 73529 Schwäbisch Gmund (DE); Kneer, Eckhard, 73240 Wendlingen (DE); Schmid, Jochen, 73553 Alfdorf-Rienharz (DE); Hiegler, Stephan, 73525 Schwäbisch Gmund (DE); Schänzel, Rainer, 73457 Essingen (DE); Breitweg, Werner, 73529 Bargau (DE)

(56) Entgegenhaltungen:
- GB-A- 1 145 440
- SU-A1- 901 681
- US-A- 2 773 370

## Beschreibung

Die Erfindung betrifft eine nicht schaltbare, formschlüssig nachgiebige Kupplung nach dem Oberbegriff des Anspruchs 1.

Die DE 42 44 203 A1 beschreibt eine elektromotorische Servolenkung für ein Kraftfahrzeug mit einer Kupplung durch die eine Antriebsverbindung zwischen einem Servomotor und einer Lenksäule gebildet ist. Mit Hilfe der Kupplung wird bei Ein- leiten eines Mindestdrehmoments über eine Lenkhandhabe die Antriebsverbindung reibschlüssig hergestellt. Die Kupplung umfasst ein Außenteil in das ein Innenteil eingreift, wobei entweder das Außenteil oder das Innenteil mit einer Nockenfläche definierter Steigung versehen ist. Ein Steuerkäfig ist zwischen dem Außenteil und dem Innenteil angeordnet und mit der Lenksäule der elektromotorischen Servolenkung verbunden. Der Steuerkäfig weist eine Halteeinrichtung für einen Wälzkörper auf, der sich zur kraftschlüssigen Verbindung zwischen Außenteil und Innenteil verklemmt.

Solche Kupplungen weisen eine komplexe Teilegeometrie auf, sind wenig geeignet zum Ausgleich von Radialversatz und Winkelversatz von Wellen und ihr Auslösemoment ist u. U. von Betriebsparametern beeinflusst und nicht reproduzierbar exakt.

Die DE 100 45 351 A1 beschreibt eine Servolenkung wobei eine Lenkwelle der Servolenkung zweiteilig ist und mit einer Klauenkupplung mit einem gegebenen Spiel zur Überlastsicherung ausgebildet ist.

In der SU 901 6 81 A1 wird eine gattungsgemäße Kupplung beschrieben, in welcher radial bewegbare Kugeln in ein, die Wellenenden radial umschließendes Kupplungsteil, eingreifen, wobei dieses Kupplungsteil fest auf einem Wellenende fixiert ist.

Aus der GB 1 145 440 A geht eine Kupplung hervor, bei welcher ein Kupplungsteil elastisch auf dem Wellenende integriert wird.

Der DE 26 58 884 A1 ist eine Kupplung für zwei koaxial angeordnete Wellenenden entnehmbar, die Fluchtwinkelfehler und Wellenversatz ausgleicht. Die Wellenenden sind geschlitzt und als radial federnde Träger von vorzugsweise als Wälzkörper ausgebildeten Verbindungsgliedern gestaltet. Die Verbindungsglieder ragen radial über den Wellenumfang hinaus und greifen entweder in dem jeweils anderen Wellenende zugeordnete Längsnuten ein oder in Längsnuten eines die Wellenenden axial und radial überkragenden Kupplungsteiles ein.

Die Kupplung ist spezifisch an die Gestalt der Wellen angepasst und ein fertigungstechnischer Bestandteil der Wellen. Die Kupplung ist nicht variabel, modulartig einsetzbar und auch nicht zu Reparaturzwecken austauschbar. Ihr Auslösemoment kann durch Fertigungstoleranzen schwanken. Ihr Auslösemoment lässt sich nicht ändern. Ihr Betriebsgeräusch ist nicht minimiert.

Ähnliche Nachteile weist eine aus einem elastischen Element gebildete Wellen-kupplung, die in der EP 1 086 317 B1 beschrieben ist, auf.

Der Erfindung liegt die Aufgabe zugrunde, eine nicht schaltbare, formschlüssig nachgiebige Kupplung zur Verbindung von Wellenenden zu schaffen, deren Toleranzbreite des Auslösemoments minimiert ist, deren Geräuschemission und

deren Prozesssicherheit verbessert ist und die kompakt baut und variabel einsetzbar ist und deren Auslösemoment einstellbar sein kann.

Die Aufgabe wird mit einer Kupplung mit den Merkmalen des Anspruchs 1 gelöst.

Dadurch dass zumindest das Kupplungsteil getrennt von einem Wellenende ausge-bildet ist und mit einer Verbindungseinrichtung auf dem Wellenende festgelegt ist, wobei die Verbindungseinrichtung ein elastomeres Verhalten hat und somit einen Wellenversatz axial radial und winklig erlaubt, ist eine Kupplung geschaffen die zudem modulartig, variabel an beliebigen Wellenenden einsetzbar ist und ein definiertes Auslösemoment, das in engen Grenzen reproduzierbar ist, aufweist. Ihre Geräuschemission ist zudem vermindert.

Bevorzugte Ausführungen ergeben sich aus den Unteransprüchen.

Die, das Kupplungsteil mit dem Wellenende verbindende Verbindungseinrichtung ist vorzugsweise als Ring, der radial zwischen dem Wellenende und dem Kupplungsteil angeordnet ist, gebildet. Der Ring ist zumindest in tangentialer Richtung form-schlüssig an dem Wellenende und/oder an dem Kupplungsteil festgelegt und somit tauschbar. Die in das Kupplungsteil eingreifenden Koppelelemente dienen zur formschlüssig nachgiebigen Verbindung von einem Wellenende mit einem anderen Wellenende, wobei die Koppelelemente in Längsnuten eines Nutringes eingreifen. Der Nutring ist wiederum bevorzugt über eine Verbindungseinrichtung mit elastomerem Verhalten auf dem anderen Wellenende festgelegt. Dadurch ist eine mögliche Toleranz in Bezug auf Winkel-, Axial- und Radialversatz der Wellenenden erhöht. Die den Nutring an dem Wellenende festlegende Verbindungseinrichtung ist bevorzugt ringförmig ausgebildet oder ein Ring. Der Ring ist bevorzugt formschlüssig auf dem Wellenende angeordnet.

Beide Verbindungseinrichtungen sind bevorzugt aus einem Elastomeren gebildet, wobei der Elastomer strukturverstärkt - etwa durch Gewebeeinlagen- oder faserverstärkt sein kann. Hierzu eignen sich Metallgewirke oder synthetische oder natürliche Fasern.

Auf seinen, den Wellenenden zugewandten Oberflächen können die Verbindungs-einrichtungen aus Elastomermaterial eine Metalloberfläche aufweisen, die gehärtet sein kann. Dabei kann der Elastomer auf eine Stahlkonstruktion, die gesintert, umgeformt oder spanabhebend hergestellt wurde, aufvulkanisiert sein.

Die Verbindungseinrichtungen sind bevorzugt mit einer Zahnwellen- oder Keilwellen-verbindung auf den Wellenenden festgelegt, wobei ihre Kontaktflächen an den Wellenenden zur besseren Montierbarkeit mit einer Kunststoffbeschichtung oder Gleitbeschichtung versehen sein kann. Die Zahnwellen- oder Keilwellenverbindung dient zur Drehmomentübertragung und ist in tangentialer Richtung oder in Rotationsrichtung der Verbindungseinrichtungen spielfrei und weist in radialer Richtung einen Freiheitsgrad auf, wodurch die Wellenenden in den Verbindungsein-richtungen radial bzw. winklig beweglich sind, wodurch Fluchtungsfehler ausgeglichen werden können. Die Kontaktflächen für die Koppelelemente an dem Kupplungsteil und an dem Nutring sind bevorzugt aus einem Metallwerkstoff gebildet.

Die Koppelelemente sind mit einer Feder in radialer Richtung von dem Kupplungsteil weg auf den Nutring und die Wellenenden hin vorgespannt. Als Feder eignet sich ein ringförmiges Federblech mit in axialer Richtung der Kupplung abgehenden Federlaschen für die Koppelelemente, sodass jedes Koppelelement von einer Feder-lasche beaufschlagt ist. Die Federn können auch durch Elastomerelemente gebildet sein. Im demontierten Zustand ist der radiale Abstand einer Federlasche zur Mittelachse des Federbleches kleiner als der halbe Durchmesser der Mantelaussenfläche des Kupplungsteils. Bei der Kupplungsmontage wird die Federlasche aufgebogen bzw. vorgespannt. Der Wert um den die jeweilige Federlasche aufgebogen bzw. vorgespannt wird, bestimmt abhängig von der verwendeten Blechstärke die Federkraft.

Die Feder kann auch als Tellerfeder ausgebildet sein, die von einem Konusring, der sich an einem axial unverschiebbaren Sicherungsring an einem Wellenende abstützt, vorgespannt ist. Die Federkraft der Feder ist einstellbar, sodass das Abschaltmoment der Kupplung bei dem die vorzugsweise als Wälzkörper oder Kugeln gebildeten Koppelelemente aus den Längsnuten des Nutenrings gedrückt werden, vorgebbar ist.

Die Kupplung eignet sich zur Verbindung zweier Wellenenden eines Lenksystems, wie etwa einer Motorwelle eines elektrischen Servomotors mit einer Abtriebswelle des Servomotors. Das Lenksystem ist als Hilfskraft- oder Fremdkraftlenkung für einen Personenkraftwagen oder leichten Nutzkraftwagen ausgebildet.

Ein Ausführungsbeispiel ist nachfolgend anhand der Zeichnung gezeigt.

In der Zeichnung zeigt:

Fig. 1 einen schematischen Längsschnitt eines Servomotor-Abtriebs mit einer nicht

schaltbaren, formschlüssig nachgiebigen Kupplung,

Fig. 2 eine Explosionsdarstellung der nicht schaltbaren, formschlüssig nachgiebigen
Kupplung in Fig. 1,

Fig. 3 eine Explosionsdarstellung einer weiteren nicht schaltbaren,
formschlüssig
nachgiebigen Kupplung.

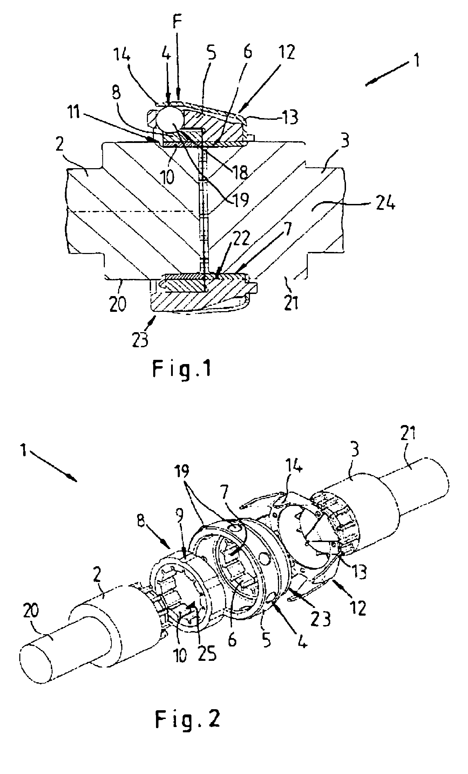

In Fig. 1 ist in einem schematischen Längsschnitt ein Servomotor-Abtrieb eines Servomotors einer elektrischen Hilfskraftlenkung gezeigt. In dem Abtrieb ist eine nicht schaltbare, formschlüssig nachgiebige Kupplung 1 eingebaut, die ein erstes Wellen-ende 2 einer Motorwelle 20 mit einem zweiten Wellenende 3 einer Abtriebswelle 21 verbindet. Die Kupplung 1, die zur Überlastsicherung und zum Ausgleich von Radial-, Axial- und Winkelversatz zwischen der Motorwelle 20 und der Abtriebswelle 21 dient, ist axial zwischen den Wellen 20, 21 angeordnet.

Wie auch Fig. 2 in einer Explosionsdarstellung der Kupplung 1 in Fig. 1 zeigt, weist die Kupplung 1 einen glockenförmigen Kupplungsteil 5, der mit einer ringförmigen Verbindungseinrichtung 6 auf einer Zahnwellenverzahnung auf dem zweiten Wellen-ende 3 formschlüssig festgelegt ist, auf. Die Verbindungseinrichtung 6 ist ein Ring 7 aus einem faserverstärkten Elastomer der Längsnuten 22 aufweist. Er dient zur Geräuschdämpfung und zum Ausgleich von Wellen-, Axial- und Radialversatz.

Das Kupplungsteil 5 weist einen Umfangsabschnitt 23 der axial der Motorwelle 20 zugewandt ist auf, der in der Art eines Wälzlager-Käfigs gebildet ist und der als Kugeln 19 gebildete Wälzkörper 18 in diskretem tangentialen Abstand zueinander hält. Die Wälzkörper 18 bilden Koppelelemente 4 der Kupplung 1. Die Kugeln 19 werden mit je einer Federlasche14 einer als ringförmiges, das Kupplungsteil 5 radial und axial überkragendes Federblech 13 gebildeten Feder 12 radial auf der Längsachse 24 des Servomotor-Abtriebs mit einer Federkraft F beaufschlagt.

Die Kugeln 19 greifen in Längsnuten 9 eines Nutringes 8 ein. Der Nutring 8 ist Teil der Kupplung 1 und aus zumindest zwei Werkstoffen gebildet. Auf seiner radial äußeren Seite ist der Nutring aus einem Metallwerkstoff, insbesondere aus Stahl, der gesintert, umgeformt oder spanabhebend geformt sein kann, gebildet.

Der Nutring 8 weist als Verbindungseinrichtung 10 zu dem ersten Wellenende 2 einen Elastomer-Ring 11 auf, der stoff-, form-, oder kraftschlüssig mit ihm verbunden ist. Der Ring 11 weist eine Verzahnung 25 auf, die, wie auch die Zahnwellenverzahnung an der Verbindungseinrichtung 6 des Kupplungsteils 5, mit einem Kunststoff mit guten Gleiteigenschaften überzogen ist. Ein axiales Gleiten der elastomeren Bestandteile der Kupplung 1 auf dem Wellenende ist damit ermöglicht.

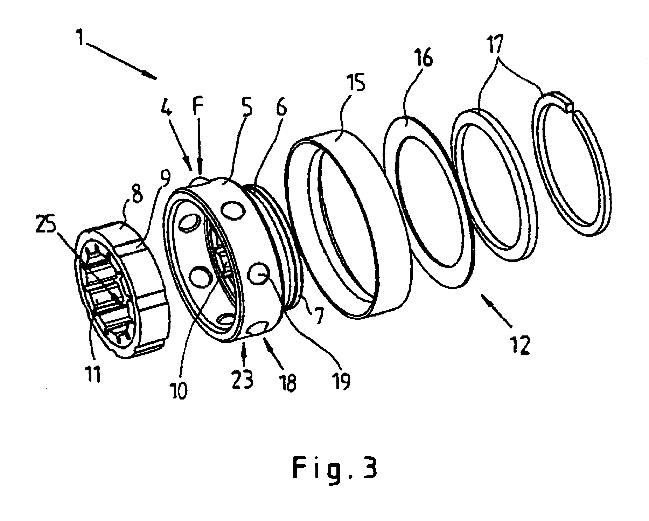

Wie Fig. 3 in einer Explosionsdarstellung einer weiteren nicht schaltbaren, form-schlüssig nachgiebigen Kupplung 1 zeigt, können anstelle des Federblechs 13 ein oder mehrere Tellerfedern 16 vorgesehen sein, die einen Konusring 15 axial mit einer Federkraft F beaufschlagen, der wiederum die Kugeln 19 in radialer Richtung vor-spannt. Die Tellerfeder 16 stützt sich zweckmäßig an einem axial unverschieblich an einem Wellenende sich abstützenden Sicherungsring 17 ab.

Für gleiche Bauteile gelten dieselben Bezugszeichen wie in den Figuren 1 und 2.

## Patentansprüche

1. Nicht schaltbare, formschlüssig nachgiebige Kupplung zur Verbindung eines ersten Wellenendes (2) mit einem zweiten Wellenende (3), wobei an den Wellenenden (2, 3) ein oder mehrere radial bewegbare, vorgespannte und tangential zu den Wellenenden (2, 3) unbewegbare Koppelelemente (4) angeordnet sind, die in ein, die Wellenenden (2, 3) radial umschließendes Kupplungsteil (5) eingreifen, **dadurch gekennzeichnet, dass** zumindest das Kupplungsteil (5) mit einer Verbindungseinrichtung (6) mit elastomerem Verhalten auf einem Wellenende (3) festgelegt ist, und dass die Koppelelemente (4) in einen drehfest mit einem Wellenende (2, 3) verbundenen Nutring (8) mit Längsnuten (9) eingreifen.

2. Kupplung nach Anspruch 1, **dadurch gekennzeichnet, dass** die Verbindungseinrichtung (6) ein Ring (7) ist.

3. Kupplung nach Anspruch 2, **dadurch gekennzeichnet, dass** der Ring (7) formschlüssig zumindest in tangentialer Richtung mit einem Wellenende (3) verbunden ist.

4. Kupplung nach Anspruch 1, **dadurch gekennzeichnet, dass** der Nutring (8) mit einer Verbindungseinrichtung (10) mit elastomerem Verhalten auf einem Wellenende (2) festgelegt ist.

5. Kupplung nach Anspruche 4, **dadurch gekennzeichnet, dass** die Verbindungseinrichtung (10) ein Ring (11) ist.

6. Kupplung nach Anspruch 5, **dadurch gekennzeichnet, dass** der Ring (11) formschlüssig auf dem Wellenende (2) festgelegt ist.

7. Kupplung nach Anspruch 1, **dadurch gekennzeichnet, dass** die Verbindungseinrichtungen (6, 10) aus einem Elastomer gebildet sind.

8. Kupplung nach Anspruch 7, **dadurch gekennzeichnet, dass** der Elastomer strukturverstärkt ist.

9. Kupplung nach Anspruch 8, **dadurch gekennzeichnet, dass** der Elastomer wellenseitig eine Metalloberfläche aufweist.

10. Kupplung nach einem der Ansprüche 1 bis 9, **dadurch gekennzeichnet, dass** die Verbindungseinrichtungen (6, 10) über eine Zahnwellen- oder Keilwellenverbindung auf den Wellenenden (2, 3) verbunden sind.

11. Kupplung nach Anspruch 10, **dadurch gekennzeichnet, dass** die Zahnwellen- oder die Keilwellenverbindung in tangentialer Richtung der Verbindungseinrichtungen (6,10) spielfrei und in radialer Richtung der Verbindungseinrichtungen (6,10) mit Spiel versehen sind.

12. Kupplung nach einem der Ansprüche 1 bis 11, **dadurch gekennzeichnet, dass** die Kontaktflächen der Koppelelemente (4) an dem Kupplungsteil (5) und dem Nutring (8) aus einem Metallwerkstoff gebildet sind.

13. Kupplung nach Anspruch 1, **dadurch gekennzeichnet, dass** die Verbindungseinrichtungen (6, 10) mit einer Kunststoffbeschichtung versehen sind.

14. Kupplung nach einem der Ansprüche 1 bis 13, **dadurch gekennzeichnet, dass** die Koppelelemente (4) mit einer Feder (12) in radialer Richtung auf die Wellenenden (2, 3) vorgespannt sind.

15. Kupplung nach Anspruch 14, **dadurch gekennzeichnet, dass** die Feder (12) aus einem ringförmigen Federblech (13) mit Federlaschen (14) in etwa axialer Richtung der Kupplung (1) gebildet ist.

16. Kupplung nach Anspruch 14, **dadurch gekennzeichnet, dass** die Feder (12) aus einem Konusring (15) und ein oder mehrere Tellerfedern (16) gebildet ist, die von dem Konusring (15) axial und/oder radial vorgespannt sind.

17. Kupplung nach Anspruch 16, **dadurch gekennzeichnet, dass** die Tellerfedern (16) sich an einem axial unverschiebbaren Sicherungsring (17) oder einem Bolzen an einem Wellenende (2, 3) abstützt.

18. Kupplung nach einem der Ansprüche 14 bis 17, **dadurch gekennzeichnet, dass** die Federkraft (F) der Feder (12) einstellbar ist.

19. Kupplung nach einem der Ansprüche 1 bis 18, **dadurch gekennzeichnet, dass** die Koppelelemente (4) Wälzkörper (18) sind.

20. Kupplung nach Anspruch 19, **dadurch gekennzeichnet, dass** die Wälzkörper (18) Kugeln (19) sind.

21. Kupplung nach einem der Ansprüche 1 bis 20, **dadurch gekennzeichnet, dass** die Kupplung (1) zur Verbindung zweier Wellenenden (2, 3) eines Lenksystems dient.

22. Kupplung nach Anspruch 21, **dadurch gekennzeichnet, dass** ein Wellenende (2, 3) zu einer Motorwelle (20) eines Servomotors gehörig ist.

23. Kupplung nach einem der Ansprüche 21 oder 22, **dadurch gekennzeichnet, dass** ein Wellenende (3) zu einer Abtriebswelle (21) eines Servomotors gehörig ist.

## Claims

1. Non-shiftable, positively compliant clutch for connecting a first shaft end (2) to a second shaft end (3), there being arranged at the shaft ends (2, 3) one or more radially movable, prestressed coupling elements (4) which are immovable tangentially with respect to the shaft ends (2, 3) and which engage into a clutch part (5) radially surrounding the shaft ends (2, 3), **characterized in that** at least the clutch part (5) is secured on a shaft end (3) by means of a connecting device (6) having an elastomeric behaviour, and **in that** the coupling elements (4) engage into a grooved ring (8) connected fixedly into rotation to a shaft end (2, 3) and having longitudinal grooves (9).

2. Clutch according to Claim 1, **characterized in that** the connecting device (6) is a ring (7).

3. Clutch according to Claim 2, **characterized in that** the ring (7) is connected positively, at least in the tangential direction, to a shaft end (3).

4. Clutch according to Claim 1, **characterized in that** the grooved ring (8) is secured on a shaft end (2) by means of a connecting device (10) having an elastomeric behaviour.

5. Clutch according to Claim 4, **characterized in that** the connecting device (10) is a ring (11).

6. Clutch according to Claim 5, **characterized in that** the ring (11) is secured positively on the shaft end (2).

7. Clutch according to Claim 1, **characterized in that** the connecting devices (6, 10) are formed from an elastomer.

8. Clutch according to Claim 7, **characterized in that** the elastomer is structurally reinforced.

9. Clutch according to Claim 8, **characterized in that** the elastomer has a metal surface on the shaft side.

10. Clutch according to one of Claims 1 to 9, **characterized in that** the connecting devices (6, 10) are connected on the shaft ends (2, 3) via a serrated-shaft or splined-shaft connection.

11. Clutch according to Claim 10, **characterized in that** the serrated-shaft or splined-shaft connection is free of play in the tangential direction of the connecting devices (6, 10) and is provided with play in the radial direction of the connecting devices (6, 10).

12. Clutch according to one of Claims 1 to 11, **characterized in that** the contact surfaces of the coupling elements (4) on the clutch part (5) and on the grooved ring (8) are formed from a metal material.

13. Clutch according to Claim 1, **characterized in that** the connecting devices (6, 10) are provided with a plastic coating.

14. Clutch according to one of Claims 1 to 13, **characterized in that** the coupling elements (4) are prestressed in the radial direction towards the shaft ends (2, 3) by means of a spring (12).

15. Clutch according to Claim 14, **characterized in that** the spring (12) is formed from an annular spring plate (13) with spring tabs (14) in an approximately axial direction to the clutch (1).

16. Clutch according to Claim 14, **characterized in that** the spring (12) is formed from a conical ring (15) and one or more cup springs (16) which are prestressed axially and/or radially by a conical ring (15).

17. Clutch according to Claim 16, **characterized in that** the cup springs (16) are supported on an axially non-displaceable securing ring (17) or a bolt at a shaft end (2, 3).

18. Clutch according to one of Claims 14 to 17, **characterized in that** the spring force (F) of the spring (12) is adjustable.

19. Clutch according to one of Claims 1 to 18, **characterized in that** the coupling elements (4) are rolling bodies (18).

20. Clutch according to Claim 19, **characterized in that** the rolling bodies (18) are balls (19).

21. Clutch according to one of Claims 1 to 20, **characterized in that** the clutch (1) serves for connecting two shaft ends (2, 3) of a steering system.

22. Clutch according to Claim 21, **characterized in that** one shaft end (2, 3) belongs to a motor shaft (20) of a servomotor.

23. Clutch according to either of Claims 21 or 22, **characterized in that** one shaft end (3) belongs to an output shaft (21) of a servomotor.

## Revendications

1. Accouplement à engagement positif flexible non commutable, pour la liaison d'une première extrémité d'arbre (2) à une deuxième extrémité d'arbre (3), un ou plusieurs éléments de couplage (4) déplaçables radialement, précontraints et non déplaçables tangentiellement aux extrémités d'arbre (2, 3) étant disposés sur les extrémités d'arbre (2, 3) et venant en prise dans une partie d'accouplement (5) entourant radialement les extrémités d'arbre (2, 3), **caractérisé en ce qu'**au moins la partie d'accouplement (5) est fixée avec un dispositif de liaison (6) ayant un comportement élastomère sur une extrémité d'arbre (3) et **en ce que** les éléments de couplage (4) viennent en prise dans une bague rainurée (8) avec des rainures longitudinales (9) connectée à une extrémité d'arbre (2, 3).

2. Accouplement selon la revendication 1, **caractérisé en ce que** le dispositif de liaison (6) est une bague (7).

3. Accouplement selon la revendication 2, **caractérisé en ce que** la bague (7) est connectée par engagement positif au moins dans la direction tangentielle à une extrémité d'arbre (3).

4. Accouplement selon la revendication 1, **caractérisé en ce que** la bague rainurée (8) est fixée avec un dispositif de liaison (10) ayant un comportement élastomère sur une extrémité d'arbre (2).

5. Accouplement selon la revendication 4, **caractérisé en ce que** le dispositif de liaison (10) est une bague (11).

6. Accouplement selon la revendication 5, **caractérisé en ce que** la bague (11) est fixée par engagement positif sur l'extrémité d'arbre (2).

7. Accouplement selon la revendication 1, **caractérisé en ce que** les dispositifs de liaison (6, 10) sont formés à partir d'un élastomère.

8. Accouplement selon la revendication 7, **caractérisé en ce que** l'élastomère à une structure renforcée.

9. Accouplement selon la revendication 8, **caractérisé en ce que** l'élastomère présente du côté de l'arbre une surface métallique.

10. Accouplement selon l'une quelconque des revendications 1 à 9, **caractérisé en ce que** les dispositifs de liaison (6, 10) sont connectés par le biais d'une liaison d'arbre denté ou d'arbre cannelé sur les extrémités d'arbre (2, 3).

11. Accouplement selon la revendication 10, **caractérisé en ce que** la liaison d'arbre denté ou d'arbre cannelé, dans la direction tangentielle des dispositifs de liaison (6, 10) est sans jeu, et dans la direction radiale des dispositifs de liaison (6, 10) est pourvue d'un jeu.

12. Accouplement selon l'une quelconque des revendications 1 à 11, **caractérisé en ce que** les surfaces de contact des éléments de couplage (4) sur la partie d'accouplement (5) et la bague rainurée (8) sont formées en un matériau métallique.

13. Accouplement selon la revendication 1, **caractérisé en ce que** les dispositifs de liaison (6, 10) sont pourvus d'un revêtement de plastique.

14. Accouplement selon l'une quelconque des revendications 1 à 13, **caractérisé en ce que** les éléments de couplage (4) sont pourvus d'un ressort (12) dans la direction radiale sur les extrémités d'arbre (2, 3).

15. Accouplement selon la revendication 14, **caractérisé en ce que** le ressort (12) est formé d'une tôle à ressort (13) de forme annulaire avec des pattes élastiques (14) dans la direction approximativement axiale de l'accouplement (1).

16. Accouplement selon la revendication 14, **caractérisé en ce que** le ressort (12) est formé d'une bague conique (15) et d'un ou de plusieurs ressorts Belleville (16) qui sont précontraints par la bague conique (15) axialement et/ou radialement.

17. Accouplement selon la revendication 16, **caractérisé en ce que** les ressorts Belleville (16) s'appuient contre une bague de fixation (17) immobile axialement, ou un boulon sur une extrémité d'arbre (2, 3).

18. Accouplement selon l'une quelconque des revendications 14 à 17, **caractérisé en ce que** la force de ressort (F) du ressort (12) est ajustable.

19. Accouplement selon l'une quelconque des revendications 1 à 18, **caractérisé en ce que** les éléments de couplage (4) sont des corps de roulement (18).

20. Accouplement selon la revendication 19, **caractérisé en ce que** les corps de roulement (18) sont des billes (19).

21. Accouplement selon l'une quelconque des revendications 1 à 20, **caractérisé en ce que** l'accouplement (1) sert à la liaison de deux extrémités d'arbre (2, 3) d'un système de direction.

22. Accouplement selon la revendication 21, **caractérisé en ce qu'**une extrémité d'arbre (2, 3) appartient à un arbre de moteur (20) d'un servomoteur.

23. Accouplement selon l'une quelconque des revendications 21 ou 22, **caractérisé en ce qu'**une extrémité d'arbre (3) appartient à un arbre de prise de force (21) d'un servomoteur.
